# EUROPEAN PATENT SPECIFICATION

(11) **EP 3 729 971 B1**
(45) Date of publication and mention of the grant of the patent: **01.05.2024**
(21) Application number: 18890344.7
(22) Date of filing: 23.03.2018
(51) Int. Cl.: A23L 7/126, A23L 29/262, A23L 29/30, A23P 10/28

(54) **BINDER COMPOSITION FOR BAR-SHAPED SOLID FOOD**
BINDEMITTELZUSAMMENSETZUNG FÜR STABFÖRMIGES FESTES NAHRUNGSMITTEL
COMPOSITION DE LIANT POUR ALIMENT SOLIDE EN FORME DE BARRE

(30) Priority: 22.12.2017 KR 20170178746
(43) Date of publication of application: 28.10.2020
(73) Proprietor: LOTTE Fine Chemical Co., Ltd., Nam-gu, Ulsan 44714 (KR)
(72) Inventor: LIM, Eun Ji, Ulsan 44714 (KR); LEE, Sang Youb, Ulsan 44714 (KR)
(74) Representative: Michalski Hüttermann & Partner Patentanwälte mbB
(86) International application number: PCT/KR2018/003412
(87) International publication number: WO 2019/124642

(56) References cited:
- EP-A2- 0 753 262
- WO-A1-2012/115781
- KR-A- 20100 119 836
- KR-A- 20100 119 836
- KR-A- 20140 112 251
- KR-A- 20170 011 397
- KR-A- 20170 030 055
- US-A1- 2007 065 557
- US-A1- 2009 214 718

## Description

### TECHNICAL FIELD

A binder composition for bar-shaped solid foods is disclosed. More particularly, a binder composition for bar-shaped solid foods, the composition including cellulose ether and saccharides is disclosed.

### BACKGROUND ART

In the field of bar-shaped solid foods such as cereal bars, which are widely used as meal substitutes or snacks, food binders are used for formation.

A conventional food binder is based on saccharides such as sugar and starch syrup, and includes high-content of saccharides to impart a binding force. However, in this case, diseases such as obesity due to hyperingestion of saccharides may be caused along with a decrease in mouthfeel due to excessive sugar content. Further, fats such as oil, margarine, and butter, which are used to improve the workability of a food binder, may cause a deterioration of functional quality due to fat rancidity during long-term storage.

As a conventional technology for the food binder, Patent Literature 1 (Korean Patent Registration No. 1303529) discloses a binder composition for bar-shaped foods, including 10 wt% to 90 wt% of sugar and 90 wt% to 10 wt% of polyglycitol. However, this binder composition is problematic in that polyglycitol has lower calories than sugar, but does not digest well in case of hyperingestion, thereby causing intestinal unstability or diarrhea. WO 2012/115781 A1 discloses composition which comprises a) a gluten-free cereal flour, b) a hydroxypropyl methylcellulose or methyl cellulose, and c) a carboxymethyl cellulose, is useful for producing food products, such as gluten-free bakery products or gluten-free pasta, EP 0 753 262 A2 discloses a sugar coating composition comprising erythritol, a water-soluble cellulose, and an aqueous medium; and a solid preparation comprising a center core of a medicine or a food, etc. coated with the sugar coating composition, and US 2007/065557 A1 discloses non sweet food binder composition that can be used in the preparation of savory snack bars, savory nutritional bars, or in savory food products used as snack or meal replacement, containing varied levels of protein, fiber, minerals, vitamins and other bioactive substances or nutritional supplements

### DESCRIPTION OF EMBODIMENTS

### TECHNICAL PROBLEM

An embodiment of the present disclosure provides a binder composition for bar-shape solid foods, the composition including cellulose ether and saccharides.

### SOLUTION TO PROBLEM

An aspect of the present disclosure provides
a binder composition for bar-shaped solid foods, the composition including: cellulose ether; and saccharides, as claimed.

The content of the cellulose ether is 2 parts by weight to 20 parts by weight with respect to 100 parts by weight of the total content of the saccharides.

The cellulose ether includes methyl cellulose, hydroxypropyl methyl cellulose, hydroxyethyl methyl cellulose, hydroxyethyl ethyl cellulose, hydroxyethyl cellulose, or any combination thereof.

An aqueous solution of the cellulose ether having a concentration of 2 wt% may have a viscosity of 3 mPa·s to 600 mPa·s, as measured by an Ubbelohde viscometer, under a condition of 20 °C.

The saccharides are sugar, starch syrup, or any combination thereof.

The binder composition for bar-shaped solid foods may further include water, but may not include at least one of fat and gelatin.

The bar-shaped solid food may be a cereal bar.

### ADVANTAGEOUS EFFECTS OF DISCLOSURE

The binder composition for bar-shaped solid foods according to an embodiment of the present disclosure is excellent in binding force and workability such as releasability.

### MODE OF DISCLOSURE

Hereinafter, a binder composition for bar-shaped solid foods according to an embodiment of the present invention will be described in detail.

In the present specification, the term "binder composition for bar-shaped solid foods" refers to a composition for binding other components other than the binder composition among components of the bar-shaped solid food.

Further, in the present specification, the term "saccharides" refer to sugar, starch syrup, or a mixture thereof, and excludes cellulose and cellulose ether.

Further, in the present specification, the term "bar-shaped solid food" refers to a non-fluidic food having a constant shape and volume in a state in which no external force is applied.

Further, in the present specification, the term "cereal bar" refers to a snack including cereals for breakfast or snack, the cereals compressed into a bar shape and combined with an edible binder.

Further, in the present specification, the term "total content of saccharides" refers to the sum of solid contents of all saccharide components.

The binder composition for bar-shaped solid foods according to an embodiment of the present disclosure includes cellulose ether and saccharides, as claimed.

The content of the cellulose ether is 2 parts by weight to 20 parts by weight with respect to 100 parts by weight of the total content of the saccharides.

When the content of the cellulose ether is less than 2 parts by weight with respect to 100 parts by weight of the total content of the saccharides, there is a problem that workability (for example, releasability) decreases and calories of the final product increase. When the content of the cellulose ether is more than 20 parts by with respect to 100 parts by weight of the total content of the saccharides, there is a problem that powdered materials (for example, the cellulose ether and saccharides) are not completely dissolved in a liquid material (for example, water) when preparing a liquid binder composition for solid foods.

Specifically, the cellulose ether includes methyl cellulose, hydroxypropyl methyl cellulose, hydroxyethyl methyl cellulose, hydroxyethyl ethyl cellulose, hydroxyethyl cellulose, or any combination thereof.

The hydroxypropyl methyl cellulose may have a methyl substitution degree (DS) of 0.27 to 2.50 and may have a hydroxypropyl substitution degree (MS) of 0.02 to 1.1.

The hydroxyethyl methyl cellulose may have a methyl substitution degree (DS) of 0.27 to 2.40 and may have a hydroxyethyl substitution degree (MS) of 0.03 to 1.3.

The hydroxyethyl ethyl cellulose may have an ethyl substitution degree (DS) of 0.7 to 1.5 and may have a hydroxyethyl substitution degree (MS) of 0.5 to 2.5.

The hydroxyethyl cellulose may have a hydroxyethyl substitution degree (MS) of 0.3 to 5.0.

The aqueous solution of the cellulose ether having a concentration of 2 wt% may have a viscosity (hereinafter, referred to as "2 wt% aqueous solution viscosity") of 3 mPa·s to 600 mPa·s, as measured by an Ubbelohde viscometer, under a condition of 20 °C. When the viscosity of the aqueous solution of the cellulose ether is within the above range, it is possible to provide a binder composition for bar-shaped solid foods, the binding composition having excellent workability while exhibiting a sufficient thickening effect.

The saccharides are sugar, starch syrup, or any combination thereof.

The binder composition for bar-shaped solid foods may further include water, but may not include at least one of fat and gelatin.

When the binder composition for bar-shaped solid foods includes a fat such as oil (for example, soybean oil, olive oil, canola oil, grapeseed oil, rice bran oil, corn oil, and/or palm oil), margarine, or butter, a deterioration in functional quality (abnormal taste or abnormal odor) due to fat rancidity may be caused during long-term storage.

Further, when the binder composition for bar-shaped solid foods includes gelatin as an animal material, there is a problem of causing a mad cow disease, thereby causing a consumer's reluctance.

The binder composition for bar-shaped solid foods according to an embodiment of the present disclosure, having the above configuration, is excellent in workability (for example, releasability), bindability, and appearance (for example, gloss), and suppresses fat rancidity and abnormal taste and abnormal odor due to the fat rancidity, thereby improving the storage stability of a final product together with the functional quality of the final product and providing a low-calorie bar-shaped solid food.

The bar-shaped solid food may be a cereal bar.

Hereinafter, the present disclosure will be described in more detail with reference to Examples, but the present disclosure is not limited to these Examples.

### Examples

### Examples 1 to 5 and Comparative Examples 1 to 7

### (Preparation of binder compositions for bar-shaped solid foods)

Cellulose ethers and saccharides were blended in the weight ratios of Table 1 to prepare binder compositions for bar-shaped solid foods. The numbers in parentheses in Table 1 below indicate the contents of cellulose ether as parts by weight with respect to 100 parts by weight of the total content (based on solids) of corn syrup and sugar.

**[Table 1]**

| | Blending ratio (wt%) | | | | |
|---|---|---|---|---|---|
| | HPMC*¹ | Corn syrup*² | Sugar*³ | Oil*⁴ | Water |
| Example 1 | 4.1 (9.51) | 28.7 | 21.3 | 0 | 45.9 |
| Example 2 | 2.3 (5.33) | 28.7 | 21.3 | 0 | 47.7 |
| Example 3 | 8.6224 (20) | 28.7 | 21.3 | 0 | 41.3776 |
| Example 4 | 0.86224 (2) | 28.7 | 21.3 | 0 | 49.13776 |
| Example 5 | 4.1 (19.25) | 0 | 21.3 | 0 | 74.6 |
| Comparative Example 1 | 0 (0) | 57.4 | 21.3 | 9.8 | 11.5 |
| Comparative Example 2 | 0 (0) | 57.4 | 21.3 | 0 | 21.3 |
| Comparative Example 3 | 0 (0) | 28.7 | 21.3 | 0 | 50.0 |
| Comparative Example 4 | 0 (0) | 0 | 21.3 | 0 | 78.7 |
| Comparative Example 5 | 0 (0) | 0 | 64.3 | 0 | 25.9 |
| Comparative Example 6 | 0.43112 (1) | 28.7 | 21.3 | 0 | 49.56888 |
| Comparative Example 7 | 9.05352 (21) | 28.7 | 21.3 | 0 | 40.94648 |

| | | | | | |
|---|---|---|---|---|---|
| *1: AnyAddy^{®} AN15 (hydroxypropyl methyl cellulose(HPMC), 2kcal/g, 2 wt% aqueous solution viscosity: 15mPa·s) of LOTTE Fine Chemical Co., Ltd. *2: about 3kcal/g, solid content 76 wt% *3: 4kcal/g *4: 9kcal/g, soybean oil | | | | | |

### Evaluation Examples

### Evaluation Example 1: Evaluation of workability (releasability), binding force, and appearance (gloss)

The workability (releasability), binding force, and appearance (gloss) of the binder compositions for bar-shaped solid foods, prepared in Examples 1 to 5 and Comparative Examples 1 to 7, were evaluated by the following method, and the results thereof are given in Table 2 below.

### (Evaluation method)

### (1) Evaluation persons: 5

### (2) Evaluation method:

A sensory test was performed on the workability (releasability), binding force, and appearance (gloss) of each of the compositions by the following method. The sensory test was evaluated by five trained sensory test personnels with three ratings (excellent: ⊚, normal: △, poor: x), and the results thereof are given in Table 2 below.

### Evaluation Example 2: Hardness evaluation

The hardness of each of the binder compositions for bar-shaped solid foods, prepared in Examples 1 to 5 and Comparative Examples 1 to 7, was measured by Texture Analyzer (Stable Micro System Co., Ltd., TA.TXPlus), and the results thereof are given in Table 2 below.

### Evaluation Example 3: Calorie evaluation

The calorific value of each of the compositions was calculated using an Atwater index, and the results thereof are given in Table 2 below.

**[Table 2]**

| | Evaluation items | | | | |
|---|---|---|---|---|---|
| | Workability (releasability) | Binding force | Appearance (gloss) | Hardness (g) | Calorie (kcal/100g) |
| Example 1 | ⊚ | ⊚ | ⊚ | 2.0 | 181 |
| Example 2 | ⊚ | ⊚ | ⊚ | 2.2 | 177 |
| Example 3 | ⊚ | ⊚ | ⊚ | 1.8 | 190 |
| Example 4 | ⊚ | ⊚ | ⊚ | 1.9 | 174 |
| Example 5 | ⊚ | ⊚ | Δ | 2.7 | 93 |
| Comparative Example 1 | Δ | ⊚ | ⊚ | 2.7 | 348 |
| Comparative Example 2 | X | ⊚ | ⊚ | 1.7 | 260 |
| Comparative Example 3 | X | Δ | Δ | 2.2 | 172 |
| Comparative Example 4 | X | Δ | Δ | 2.6 | 85 |
| Comparative Example 5 | Not prepared | | | | |
| Comparative Example 6 | X | Δ | Δ | 1.8 | 173 |
| Comparative Example 7 | Not prepared | | | | |

Referring to Table 2 above, it was found that in the binder compositions for bar-shaped solid foods, prepared in Examples 1 to 5, workability (releasability), binding force, and an appearance (gloss) are normal or more, and calorie is less than 190 kcal /100 g, which is low.

In contrast, it was found that in the binder compositions for bar-shaped solid foods, prepared in Comparative Examples 1 to 4 and 6, at least one of workability (releasability), binding force, and an appearance (gloss) is normal or less, and calorie is more than 250 kcal /100 g, which is high.

Meanwhile, it was found that in the binder composition for bar-shaped solid foods, prepared in Comparative Example 5, binding force is low, and thus it is impossible to manufacture a bar-shaped solid food.

Further, it was found that in the binder composition for bar-shaped solid foods, prepared in Comparative Example 7, when manufacturing a binder, powered materials are not completely dissolved in a liquid material and are lumped, and thus this binder composition is not suitable for a binder for bar-shaped solid foods.

## Claims

1. A binder composition for bar-shaped solid foods, the composition comprising: cellulose ether; and saccharides,
wherein the cellulose ether includes methyl cellulose, hydroxypropyl methyl cellulose, hydroxyethyl methyl cellulose, hydroxyethyl ethyl cellulose, hydroxyethyl cellulose, or any combination thereof,
wherein the saccharide is sugar, starch syrup, or any combination thereof,
wherein a content of the cellulose ether is 2 parts by weight to 20 parts by weight with respect to 100 parts by weight of a total content of the saccharide,
wherein the binder composition does not comprise fat.

2. The binder composition of claim 1, wherein an aqueous solution of the cellulose ether having a concentration of 2 wt% has a viscosity of 3 mPa.s to 600 mPa·s, as measured by an Ubbelohde viscometer, under a condition of 20 °C.

3. The binder composition of claim 1, wherein the binder composition further comprises water, but does not comprise gelatin.

## Patentansprüche

1. Bindemittelzusammensetzung für riegelförmige feste Nahrungsmittel, wobei die Zusammensetzung aufweist:
Celluloseether; und
Saccharide,
wobei der Celluloseether Methylcellulose, Hydroxypropylmethylcellulose, Hydroxyethylmethylcellulose, Hydroxyethylethylcellulose, Hydroxyethylcellulose oder eine beliebige Kombination davon aufweist,
wobei das Saccharid Zucker, Stärkesirup oder eine beliebige Kombination davon ist,
wobei der Gehalt an Celluloseether 2 Gewichtsteile bis 20 Gewichtsteile, bezogen auf 100 Gewichtsteile des Gesamtgehalts des Saccharids, beträgt, und
wobei die Bindemittelzusammensetzung kein Fett enthält.

2. Bindemittelzusammensetzung nach Anspruch 1, wobei eine wässrige Lösung des Celluloseethers mit einer Konzentration von 2 Gew.-% eine Viskosität von 3 mPa·s bis 600 mPa·s, gemessen mit einem Ubbelohde-Viskosimeter unter einer Bedingung von 20°C, aufweist.

3. Bindemittelzusammensetzung nach Anspruch 1, wobei die Bindemittelzusammensetzung ferner Wasser, aber keine Gelatine enthält.

## Revendications

1. Composition de liant pour aliments solides en forme de barre, la composition comprenant : de l'éther de cellulose, et des saccharides
dans laquelle l'éther de cellulose inclut du méthylcellulose, hydroxypropylméthylcellulose, hydroxyéthylméthylcellulose, hydroxyéthyléthylcellulose, hydroxyéthylcellulose, ou une combinaison de ceux-ci,
dans laquelle le saccharide est du sucre, sirop d'amidon, ou une combinaison de ceux-ci,
dans laquelle une teneur de l'éther de cellulose est comprise entre 2 parties en poids et 20 parties en poids par rapport à 100 parties en poids d'une teneur totale du saccharide,
dans laquelle la composition de liant ne comprends pas de matière grasse.

2. Composition de liant selon la revendication 1, dans laquelle une solution aqueuse de l'éther de cellulose ayant une concentration de 2 % en poids a une viscosité de 3 mPa·s à 600 mPa·s, telle que mesurée par un viscosimètre Ubbelohde, à une condition de 20°C.

3. Composition de liant selon la revendication 1, dans laquelle la composition de liant comprend en outre de l'eau, mais ne comprend pas de gélatine.
